# EUROPÄISCHE PATENTSCHRIFT

(11) **EP 0 699 621 B1**
(45) Veröffentlichungstag und Bekanntmachung des Hinweises auf die Patenterteilung: **12.11.1997**
(21) Anmeldenummer: 94113535.2
(22) Anmeldetag: 30.08.1994
(51) Int. Cl.: B66F 9/18

(54) **Mehrteiliger Manipulator für ein fahrbares Arbeitsgerät**
Manipulator with several parts for a mobile work apparatus
Manipulateur à plusieurs parties pour un appareil de travail mobile

(43) Veröffentlichungstag der Anmeldung: 06.03.1996
(73) Patentinhaber: Lingen, Paul, D-47669 Wachtendonk-Wankum (DE)
(72) Erfinder: Lingen, Paul, D-47669 Wachtendonk-Wankum (DE)
(74) Vertreter: Funken, Josef, Dipl.-Ing.

(56) Entgegenhaltungen:
- DE-A- 4 242 667
- FR-A- 1 316 425
- GB-A- 1 604 002
- GB-A- 2 224 263
- US-A- 3 198 366
- IEEE TRANSACTIONS ON ELECTRONICS, Bd.IE-30, Nr.3, August 1983, NEW-YORK Seiten 269 - 276 SHOHEI YAGISHITA AND MASANORI KANDA 'arc welding robot systems for large steel construction'

## Beschreibung

Die Erfindung betrifft einen mehrteiligen Manipulator zum genauen Manipulieren eines Bauteils in allen drei Richtungen des rechtwinkligen räumlichen Koordinatensystems, der vorn an einem fahrbaren Arbeitsgerät lösbar anzubringen ist, mit einem geräteseitigen Anschließteil zum Anschließen des Manipulators am Arbeitsgerät und mit einem bauteilseitigen Werkzeug mit Halterungen zum Aufnehmen, Bewegen, Halten und Abgeben des Bauteils, wobei zum genauen linearen Verschieben des Bauteils in allen drei achsparallelen Richtungen eine Gruppe von drei Linearmodulen vorgesehen ist, von denen das eine als Schiebemodul, das andere als Distanzierungsmodul und das weitere als Hebemodul ausgebildet ist und das Schiebemodul Bewegungen in Richtung der Querachse nach rechts und nach links, das Distanzierungsmodul Bewegungen in Montagerichtung vorwärts und rückwärts und das Hebemodul Bewegungen auf der senkrechten Achse aufwärts und abwärts ausführt, und wobei zum Kippen des Bauteils ein um eine quer zur Montagerichtung orientierte Querachse zu kippendes und in beliebiger Kipplage zu arretierendes Kippmodul, das aus einem Kippmast und zwei parallelen zueinander angeordneten Achsen besteht, angeordnet ist und wobei zum Rollen des Bauteils in Montagerichtung ein um die Längsachse im Uhrzeigersinn und entgegen dem Uhrzeigersinn zu rollendes und in beliebiger Rolllage zu arretierendes Rollmodul vorgesehen ist.

Die Montage plattenförmiger und/oder stabförmiger Bauteile ist, wenn diese in ihren räumlichen Abmessungen groß und/oder in ihren Gewichten schwer sind, von mehreren Personen gleichzeitig vorzunehmen, wobei die Bauteile, etwa großflächige Platten bzw. lange Stäbe, Träger bzw. Rahmen und dergleichen in die erforderliche Position zu bringen, dort zu halten und zu befestigen sind. Derartige Arbeiten sind infolge der großen Abmessungen und der hohen Gewichte solcher Bauteile schwierig und ermüdend. Darüber hinaus besteht für die mit diesen Arbeiten befaßten Personen eine beträchtliche Unfallgefährdung und die Gefahr, daß derartige Platten bzw. Stäbe bei der Montagearbeit beschädigt werden könnten.

Aus der DE-OS 42 42 667 ist ein mehrteiliges Vorsatzgerät für ein fahrbares Arbeitsgerät bekannt, das vorn am Arbeitsgerät lösbar anzubringen ist. Das Vorsatzgerät hat einen geräteseitigen Anschlußteil um Anschließen des Vorsatzgerätes am Arbeitsgerät und einen bauseitigen Trageteil mit Halterungen zum Aufnehmen, Bewegen, Halten und Abgeben des Bauteiles sowie Zwischenteile zwischen dem Anschließteil und dem Trageteil, wobei die Anschließteile miteinander und mit dem Anschließteil sowie dem Trageteil beweglich verbunden sind. Am geräteseitigen Ende des Vorsatzgerätes ist ein Hebemodul angeordnet, daß mit dem Arbeitsgerät zu verbinden und gegenüber dem Arbeitsgerät mittels eines Hebeantriebes in der Höhe verstellbar sowie in der gewünschten Höhe festlegbar ist. Außerdem ist vorn an dem Hebemodul ein Schiebemodul nach beiden Seiten verschieblich gelagert und mittels eines Schiebeantriebes verschiebbar sowie in einer gewünschten Seitenlage arretierbar. An dem Schiebemodul ist ein Distanzierungsmodul vorgesehen und mittels eines Distanzierungsantriebes in Längsrichtung zu verlängern oder zu verkürzen und in der gewünschten Position zu halten. Außerdem ist vorn an dem Distanzierungsmodul ein Schwenkmodul schwenkbeweglich gelagert und mittels eines Schwenkantriebes zu verschwenken und in der gewünschten Schwenklage zu arretieren.

Zwischen dem Schiebemodul und dem Distanzierungsmodul ist ein Neigungsmodul vorgesehen. Außerdem ist zwischen dem Distanzierungsmodul und dem Schwenkmodul ein Drehmodul angeordnet. Das Schwenkmodul besteht aus einem Schwenkarm und einem Tragarm, wobei der Schwenkarm an seinem unteren Ende in einem Schwenklager an dem Distanzierungsmodul bzw. an dem Drehmodul schwenkbeweglich gelagert ist und am oberen Ende über ein oberes Schwenklager mit dem Tragearm schwenkbeweglich verbunden ist. An dem Tragearm sind als Halterungen Saugnäpfe, Elektromagnete oder mechanische Halterungen in Form von Klammern oder dergleichen vorgesehen, die auf dem Tragearm in einem bestimmten Muster verteilt bzw. auf einem bestimmten Raster angeordnet sind.

In der US-PS 3 598 263 ist ein mehrteiliges Vorsatzgerät für ein fahrbares Arbeitsgerät beschrieben, wobei auf den Zinken des höhenverstellbaren Schlittens eines Hubstaplers eine Plattform vorgesehen ist, auf der eine Drehscheibe gelagert ist.

Auf der Drehscheibe sind zwei parallel zueinander angeordnete untere Schienen vorgesehen, die an ihren beiden freien Enden mittels eines Balkens miteinander verbunden sind und auf denen zwei obere Schienen angeordnet sind, die einen Rahmen tragen. An der dem Arbeitsgerät zugewandten oberen Schiene ist ein senkrecht stehendes U-förmiges Profil vorgesehen, an dem übereinander zwei Hydraulikzylinder schwenkbeweglich angeschlagen sind. Mit der anderen oberen Schiene sind zwei parallel zueinander angeordnete Führungsprofile verbunden, zwischen denen die Hydraulikzylinder seitlich geführt sind.

In der Mitte zwischen den zwei unteren Schienen ist ein hydraulisch zu betätigender zweiseitige beaufschlagbarer quergelagerter Zylinder vorgesehen, dessen Kolbenstange an dem Querbalken und dessen Zylinder an dem oberhalb der zwei oberen Schienen angeordneten Rahmen befestigt ist. An den beiden Kolbenstangenenden ist über ein Gestänge und ein Drehlager eine Haltevorrichtung angeordnet, an der mehrere Saugnäpfe zum Halten einer Glasscheibe vorgesehen sind.

Der an dem Arbeitsgerät angeordnete Hubschlitten gehört unmittelbar zum Arbeitsgerät und ist als Teil des Arbeitsgerätes entlang dem Hubmast des Arbeitsgerätes in der Höhe verstellbar. Die auf den Zinken des Hubschlittens angeordnete Plattform ist hier ortsfest vorgesehen. Mittels des querliegenden doppelt beaufschlagbaren Zylinders sind die beiden oberen Zylinder mit den zwei oberen Schienen sowie der Lagerung und der Führung bei Beaufschlagung des doppelt beaufschlagbaren Hydraulikzylinders nach einer Seite hin verschieblich. Der Tragerahmen ist mittels der beiden längsgelagerten Zylinder in Fahrzeuglängsrichtung und in entgegengesetzter Richtung verschiebbar. Außerdem ist es durch unterschiedliche Beaufschlagung der beiden übereinander angeordneten längsgerichteten Zylinder möglich, den Halterahmen geringfügig aus der senkrechten Position zu beiden Seiten hin, also oben in Fahrzeuglängsrichtung und in entgegengesetzter Richtung zu schwenken.

Der Halterahmen ist auf einem Drehbolzen manuell um 360° drehbar und in einem bestimmten Drehwinkel durch zwei Stifte festlegbar, die in einem gegenüberliegenden Rasterkreis zum Einrasten gebracht werden können. Die gesamte Einheit ist mittels der Drehscheibe nach beiden Seiten um einen begrenzten Winkel drehbar, wobei der Drehwinkel von den räumlichen Gegebenheiten hinsichtlich der Anordnung dieses Vorsatzgerätes im Hinblick auf das Arbeitsgerät begrenzt ist.

Aus der FR-PS 1 316 425 ist ein Vorsatzgerät für einen Hubstapler bekannt, das mittels eines Schlittens am Hubbaum des Gabelstaplers in der Höhe verstellbar ist. Der Schlitten ist um eine senkrechte Achse nach beiden Seiten hin um einen bestimmten begrenzten Betrag drehbar. Am vorderen Ende des Schlittens ist ein Anschlußteil mit einem oberen und einem unteren Gelenk vorgesehen, wobei in dem oberen Gelenk ein Hydraulikzylinder und in dem unteren Gelenk eine Lasche schwenkbeweglich angeordnet sind und wobei der Hydraulikzylinder und die Lasche an ihren jeweiligen anderen Enden gelenkig mit einem gleichen um 180° gewendeten Anschlußteil verbunden sind. Die beiden Anschlußteile, der Hydraulikzylinder und die Lasche bilden ein Gelenkviereck. Am vorderen Ende des vorderen Anschlußteiles ist eine Halteplatte mit Halteeinrichtungen zum Halten und Tragen eines großflächigen Werkstückes vorgesehen.

Bei entsprechend weitem Ausfahren der Kolbenstange ist die an dem vorderen Anschlußteil vorgesehene Halteplatte parallel zur Flurebene und bei ganz eingefahrener Kolbenstange senkrecht zur Flurebene ausgerichtet. In dem Hubschlitten ist zu beiden Seiten der senkrecht stehenden Achse je ein Hydraulikzylinder vorgesehen, der das Drehen nach links und rechts bewirkt.

Dieses Vorsatzgerät ist lediglich heb- und senkbar, um einen bestimmten, begrenzten Betrag um eine senkrechte Achse drehbar und um eine horizontale Querachse aus einer Lage parallel zur Flurebene in eine Lage senkrecht zur Flurebene zu neigen.

Aus der DE-AS 1 006 794 ist ein Stapelgerät mit einem Fahrwerk bekannt, an dessen vorderem Ende ein Hubmast vorgesehen ist, an dem ein Hubschlitten höhenverstellbar geführt ist. Hierbei gehört der Hubmast zusammen mit dem Hubschlitten unmittelbar zum Stapelgerät, also zum fahrbaren Arbeitsgerät. Ungefähr horizontal am Hubschlitten des Hubmastes ist ein rahmenförmiger Hilfsmast angeordnet, an dem ein mit einem Lastträger ausgerüstete Schlitten in der Längachse des Hilfsmastes bewegt werden kann. Dabei stellt der Hilfsmast mit dem Schlitten und dem Lastträger ein Vorsatzgerät dar, das als Distanzierungsmodul ausgebildet ist.

In diesem Falle besteht das fahrbare Arbeitsgerät aus dem Fahrwerk, dem Hubmast und dem Hubschlitten, während das Vorsatzgerät aus dem Hilfsmast, dem Schlitten und dem Lastträger besteht. Die Trennung zwischen dem fahrbaren Arbeitsgerät und dem Vorsatzgerät verläuft also zwischen dem Hubschlitten des Hubmastes und dem geräteseitigen Anlenkende des Hilfsmastes. Der Hubmast und dessen Hubschlitten sind feste, nicht abnehmbare Teile des Arbeitsgerätes und gehören somit nicht zum Vorsatzgerät. Sie können dem Zusatzgerät auch nicht zugeordnet werden.

Dieses Vorsatzgerät erlaubt lediglich eine Bewegungen Längsrichtung des Hilfsmastes bzw. in Fahrzeuglängsrichtung. Ein Heben des Lastträgers mit diesem Vorsatzgerät ist nicht möglich, vielmehr erfolgt das Heben über den Hubschlitten des Hubmastes, also mittels des fahrbaren Arbeitsgerätes. Mit diesem bekannten Stapelgerät ist es möglich, mit dem Lastenträger Lasten aufzunehmen, diese anzuheben oder abzusenken, entlang dem Hilfsmast zu verschieben, ggf. anschließend mit dem Arbeitsgerät zu verfahren und schließlich wieder abzusetzen.

Aus der DE-Z: Deutsche Hebe- und Fördertechnik, Juli 1988, S. 89 ist ein Freisicht-Zinkenverstellgerät bekannt, das zwei am Hubschlitten eines Gabelstaplers angeordnete Zinken zeigt, und zwar derart, daß beide Zinken sich jeweils in entgegengesetzter Richtung bewegen. Das ist an den beiden hydraulischen Zylindern erkennbar, deren Kolbenstangen an den Zinken und deren Zylinder an dem Hubschlitten angelehnt sind. Das bedeutet, daß beide Zinken entweder in Richtung zueinander oder in Richtung auseinander verschoben werden. Somit können die Zinken nicht gemeinsam aus der Flucht des Gabelstaplers herausbewegt werden. Damit kann lediglich der Abstand der beiden Zinken voreinander bzw. die Ladefläche der beiden Zinken verändert werden. Jedenfalls besteht nicht die Möglichkeit, beide Zinken aus der Flucht des Gabelstaplers herauszubewegen, beispielsweise beide Zinken in der gleichen Richtung zu nur einer einzigen Seite des Gabelstaplers hin zu verschieben.

Die diesem Gabelstapler besteht das Vorsatzgerät aus den beiden Zinken und den ihnen zugeordneten hydraulischen Zylindern. Der Hubschlitten selbst gehört zum Gabelstapler. Mit diesem Gabelstapler ist es lediglich möglich, eine Last anzuheben, diese zu verfahren und wieder abzusenken.

Aus dem deutschen Gebrauchsmuster 92 00 663 ist ein Vorsatzgerät für einen fahrbaren Gabelstapler bekannt, wobei das Vorsatzgerät einen Rahmen hat, der mit den Gabeln des Gabelstaplers zu verbinden ist. Außerdem hat das Vorsatzgerät eine Aufnahmeeinrichtung zum Aufnehmen und Abgeben zu transportierender Gegenstände, wobei die Aufnahmeeinrichtung mit dem Rahmen um eine horizontale Achse schwenkbar verbunden ist. Dabei weist die Aufnahmeeinrichtung Greifelemente zum Halten von plattenförmigen Montageelementen auf. Außerdem ist vorgesehen, daß die horizontale Achse quer zur Fahrtrichtung des Gabelstaplers ausgerichtet ist und daß die Aufnahmeeinrichtung ferner um eine vertikale Achse schwenkbar ist. Die horizontale Achse und die vertikale Achse können in einem ersten Zwischenstück der Aufnahmeeinrichtung gehalten sein, das um die vertikale Achse schwenkbar mit dem Rahmen und um die horizontale Achse mit dem Rest der Aufnahmeeinrichtung verbunden ist. Hierdurch ist das Anbringen von Montageplatten beim Bau von Kühlräumen und Kühlhallen zu vereinfachen.

Mit diesem Vorsatzgerät ist es lediglich möglich, Platten aufzunehmen und um drei Achsen zu drehen. Ein genaues Positionieren derartiger Platten ist mit dem Vorsatzgerät nicht möglich, vielmehr ist es zum genauen Positionieren der Platten erforderlich, mit dem das Vorsatzgerät tragenden Gabelstapler die Positionierung der Platten vorzunehmen, also mit dem Gabelstapler genau zu fahren. Hierzu bedarf es eines besonders erfahrenen Gabelstaplerfahrers, der bei solchen Montagearbeiten ständig zugegen sein muß. Es genügt somit nicht, mit dem Gabelstapler lediglich angenähert in die Nähe der Montagestelle zu fahren und die genaue Positionierung mit dem Vorsatzgerät vorzunehmen.

Aus der deutschen Offenlegungsschrift 25 15 562 ist ein Vorsatzgerät für Gabelstapler mit einem Hubgerüst für vertikale Verschiebung bekannt, das ohne zusätzliche Abstützmaßnahmen arbeitsfähig ist. Diese Anordnung ist so getroffen, daß an dem Gabelträger des Gabelstaplers ein teleskopierbarer, im Winkel verstellbarer Ausleger vorgesehen ist, an dessen Ende eine im Winkel verstellbare Arbeitsbühne abgelenkt ist, deren Plattform mit einer hydraulischen, von der jeweiligen Winkelverstellvorrichtung des Auslegers zwangsgesteuerten Neigungskorrektur-Vorrichtung in horizontaler Lage gehalten wird. Dabei sind Elemente vorgesehen, die die mechanischen, hydraulischen und elektrischen Antriebsvorrichtungen des Vorsatzgerätes mit den entsprechenden die mechanische, hydraulische oder elektrische Energie liefernden Energiequellen des Gabelstaplers koppeln.

In dem deutschen Gebrauchsmuster 76 35 851 ist eine Vorrichtung zum Aufnehmen eines Körpers, insbesondere einer Platte beschrieben, wobei ein an einem Förderfahrzeug anbringbarer Rahmen vorgesehen ist, der zur Aufnahme eines Antriebsmotors, einer Pneumatikpumpe und eines Hydraulikaggregates ausgebildet ist, und wobei an dem Rahmen eine mittels eines Arbeitszylinders schwenkbare Saugplatte mittels eines Gelenkes angelenkt ist.

Aus dem deutschen Gebrauchsmuster 88 13 516 ist ein Gabelstapler mit in Führungen des Gabelträgers durch einen Antrieb querverschieblichen Gabelzinken und mit einer Zusatzeinrichtung zum Ankuppeln von Behältern oder dergleichen, vorzugsweise zum Aufnehmen von Behältern zur Lagerung gefährlicher Stoffe und Flüssigkeiten bekannt. Diese Anordnung ist so getroffen, daß um den Fußbereich der Gabelzinken schwenkbare hebelförmige Auflagen vorgesehen sind, die durch einen Antrieb von ihrer an das Hubgerüst des Gabelstaplers angeklappten inaktiven Stellung auf die Gabelzinken absenkbar und formschlüssig mit diesen kuppelbar sind und die an ihren inneren einander zugewandten Seiten oder Bereichen Formstücke und/oder Zapfen oder dergleichen zum formschlüssigen Ankuppeln an die Behälter aufweisen.

Gemäß einer aus dem deutschen Gebrauchsmuster 91 07 033 bekannten Befestigungsvorrichtung für ein an einen Gabelstapler anbaubares Vorsatzgerät ist eine Geräteaufnahmeplatte mit einer Zinkenaufnahmeeinrichtung an ihrer Unterkante und im Abstand übereinander angeordneten Klemmbacken oberhalb der Zinkenaufnahmeeinrichtung vorgesehen, von denen mindestens eine Klemmbacke höhenverschiebbar ausgebildet ist. Die höhenverschiebbare Klemmbacke ist auf einem Bolzen angeordnet, dessen aus der Klemmbacke herausragendes Ende eine Öffnung der Geräteaufnahmeplatte durchragt und auf der eine Exzenterscheibe drehbar angeordnet ist, wobei der lichte Durchmesser der Öffnung größer als der Durchmesser des Bolzens ist.

Aus der EP 0 311 869 A1 ist ein Manipulator zum Handling von schweren Lasten bekannt, insbesondere von in Schuppenformation lose übereinanderliegenden, zu Wickeln aufgewundenen Druckprodukten, wobei eine Haltevorrichtung an einem freien Ende einer gegenüber der vertikalen um einen Lagewinkel geneigten Drehachse oder eines um einen Winkel geneigten starren Tragerarms, welche an eine Montagevorrichtung befestigt sind, gehalten wird, wobei die Haltevorrichtung relativ zur Montagevorrichtung drehbar oder schwenkbar ist. Dabei liegt der Lagewinkel zwischen der Drehasche bzw. dem Trägerarm und einer Horizontalebene zwischen 30 und 60°.

Der Erfindung liegt die Aufgabe zugrunde, einen mehrteiligen Manipulator für ein fahrbares Arbeitsgerät der einleitend genannten Art zu schaffen, mit dem es möglich ist, Bauteile in Form von sperrigen Platten und langen Trägern bzw. Rahmen anzuheben und genau zu positionieren, ohne daß es erforderlich ist, daß diese genaue Positionierung mit dem Arbeitsgerät selbst durchzuführen ist, es vielmehr genügt, die Bauteile mittels des Arbeitsgerätes lediglich in die Nähe der Montagestelle zu bringen, wobei mit dem Vorsatzgerät alle geradlinigen Bewegungen, nämlich Hub, Querschub und Längsschub sowie alle Rotationsbewegungen, nämlich Gieren um eine senkrecht zur Flurebene angeordnete senkrechte Achse in beiden Gierrichtungen, Rollen um eine horizontale in Montagerichtung gerichtete Rollachse und Kippen um eine horizontale quer zur Montagerichtung gerichtete Kippachse, und zwar jeweils um insgesamt mehr als 180°.

Diese Aufgabe wird erfindungsgemäß dadurch gelöst, daß der Kippmast an seinem unteren Ende in einer Kippachse an einem Linearmodul kippbeweglich quer zur Montagerichtung gelagert ist und daß der Kippmast an seinem oberen Ende über eine obere Rollachse mit dem Rollmodul verbunden ist.

Die gleiche Aufgabe wird auch dadurch gelöst, daß die obere Kippachse durch einen Gierantrieb, der zwischen der Kipp- und der Rollachse angeordnet ist, um die Mittellängsachse des Kippmastes in beiden Richtungen zu verdrehen sowie in beliebiger Stellung zu halten ist und daß der Kippmast an seinem unteren Ende um eine Kippachse an einem Linearmodul kippbeweglich quer zur Montagerichtung gelagert sowie am oberen Ende über eine obere Rollachse mit dem Rollmodul verbunden ist.

Zur Lösung der gleichen Aufgabe kann auch vorgesehen sein, daß die obere Kippachse durch einen Gierantrieb, der zwischen der linearmodulseitigen Kippachse und der Kippachse einer Kipp-Rollmodulgruppe angeordnet ist, um die Mittellängsachse des Kippmastes in beiden Richtungen zu verdrehen sowie in beliebiger Stellung zu halten ist und daß der Kippmast an seinem unteren Ende um eine Kippachse an einem Linearmodul kippbeweglich quer zur Montagerichtung gelagert sowie am oberen Ende über eine obere Rollachse mit dem Rollmodul verbunden ist.

Hierdurch gelangt man zu einem Manipulator der vorstehend genannten Art, der die vorerwähnte Erfindungsaufgabe voll erfüllt. Damit ist sichergestellt, daß ein unhandliches Bauteil in beliebiger Lage im Raum gehalten werden kann, wobei es unerheblich ist, wie bzw. auf welcher schrägen, schiefen, abschüssigen oder unebenen Unterlage das fahrbare Arbeitsgerät steht.

Als fahrbares Arbeitsgerät kommt beispielsweise ein Gabelstapler in Frage. Bei Verwendung eines Gabelstaplers kann ggf. bei bodennaher Montage auf das Hebemodul verzichtet werden, weil der Gabelstapler selbst in seinem vorderen Bereich bzw. mit seinem Hubmast ein Hebemodul darstellt, so daß ein für einen Gabelstapler vorgesehener Manipulator unter Verzicht auf das Hebemodul lediglich ein Schiebemodul und ein Distanzierungsmodul für die beiden verbleibenden räumlichen Koordinatenrichtungen sowie ein Kippmodul und ein Rollmodul aufweist.

Im Falle der Verwendung eines Ladekrans oder eines Autokrans als fahrbares Arbeitsgerät kann auf ein Hebemodul nicht verzichtet werden, so daß ein für einen Ladekran oder für einen Autokran vorgesehener Manipulator alle drei geradlinig arbeitenden Module, nämlich das Hebemodul, das Schiebemodul und das Distanzierungsmodul aufweisen muß und wobei er darüber hinaus auch die drei Kreismodule, nämlich das Giermodul, das Kippmodul und das Rollmodul aufweisen muß, damit unabhängig vom Standort des Ladekrans bzw. des Autokrans das von dem an diesem angeordneten Manipulator zu manipulierende Bauteil in beliebiger räumlicher Lage gehalten werden kann.

Vorteilhafterweise ist zwischen dem Arbeitsgerät und dem Manipulator ein Giermodul vorgesehen, das mittels eines Gierantriebes um eine oder zwei senkrecht auf der Flurebene stehende Drehachsen in beiden Drehrichtungen zu gieren ist.

Das Giermodul kann zusätzlich als Arbeitsbühne ausgebildet sein.

Der Manipulator ist zweckmäßig so ausgebildet, daß die Reihenfolge der einzelnen Module vom Anschließteil aus
Schiebemodul, Distanzierungsmodul, Hebemodul
   oder
Schiebemodul, Hebemodul, Distanzierungsmodul
   oder
Hebemodul, Distanzierungsmodul, Schiebemodul
   oder
Hebemodul, Schiebemodul, Distanzierungsmodul
   oder
Distanzierungsmodul, Hebemodul, Schiebemodul
   oder
Distanzierungsmodul, Schiebemodul, Hebemodul
   ist.

Der Manipulator kann zweckmäßig so ausgebildet sein, daß drei Linearmodule, die mit je einer anderen der drei räumlichen Linearbewegungen des Koordinatensystems ausgestattet sind, eine Gruppe bilden, ohne daß zwischen den Linearmodulen ein oder mehrere Drehmodule angeordnet sind.

Die Anordnung kann so getroffen sein, daß die Drehmodule, die mit je einer anderen der drei räumlichen Rotationsbewegungen des Koordinatensystems ausgestattet sind, eine Gruppe bilden, ohne daß zwischen den Drehmodulen ein oder mehrere Linearmodule angeordnet sind.

In weiterer Ausgestaltung der Erfindung können die Drehmodule so angeordnet sein, daß ein freies Drehen des Bauteiles um alle drei Achsen des räumlichen Koordinatensystems möglich ist.

Die Erfindung wird nachfolgend anhand eines Ausführungsbeispieles des näheren erläutert. Es zeigt
- Fig. 1: eine Vorderansicht auf das erfindungsgemäß ausgebildete Vorsatzgerät in der inaktiven Stellung,
- Fig. 2: eine Seitenansicht auf das Vorsatzgerät in Richtung des Pfeiles II der Figur 1,
- Fig. 2A: eine Vergrößerung der Figur 2 unterhalb der Linie A-B,
- Fig. 2B: eine Vergrößerung der Figur 2 oberhalb der Linie A-B,
- Fig. 3: eine Draufsicht auf das Vorsatzgerät in Richtung des Pfeiles III der Figur 1,
- Fig. 4: eine Seitenansicht auf das Vorsatzgerät beim Aufnehmen eines Bauteiles,
- Fig. 5: eine Vorderansicht auf das Giermodul als Arbeitsbühne,
- Fig. 6: eine Seitenansicht in Richtung des Pfeiles VI auf Figur 5,
- Fig. 7: eine Draufsicht in Richtung des Pfeiles VII auf Figur 5,
- Fig. 8: eine Vorderansicht auf das Giermodul als Arbeitsbühne mit angekuppeltem Manipulator in inaktiver Stellung,
- Fig. 9: eine Seitenansicht auf Figur 8 in Richtung des Pfeiles IX,
- Fig. 10: eine Draufsicht auf Figur 8 in Richtung des Pfeiles X und
- Fig. 11: eine Draufsicht auf das Giermodul als Arbeitsbühne mit angekuppeltem Manipulator.

Der in der Zeichnung dargestellte mehrteilige Manipulator ist für ein Arbeitsgerät bestimmt, beispielsweise für einen Hubstapler bzw. einen Autokran oder einen Lkw-Ladekran. Der mehrteilige Manipulator ist am in der Zeichnung im einzelnen nicht dargestellten Arbeitsgerät lösbar anzubringen.

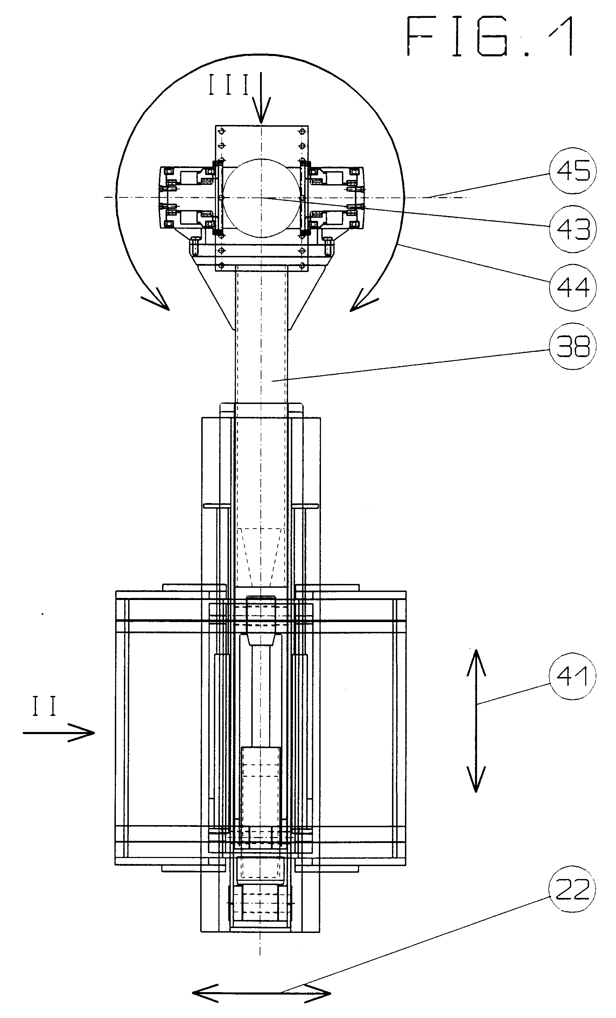

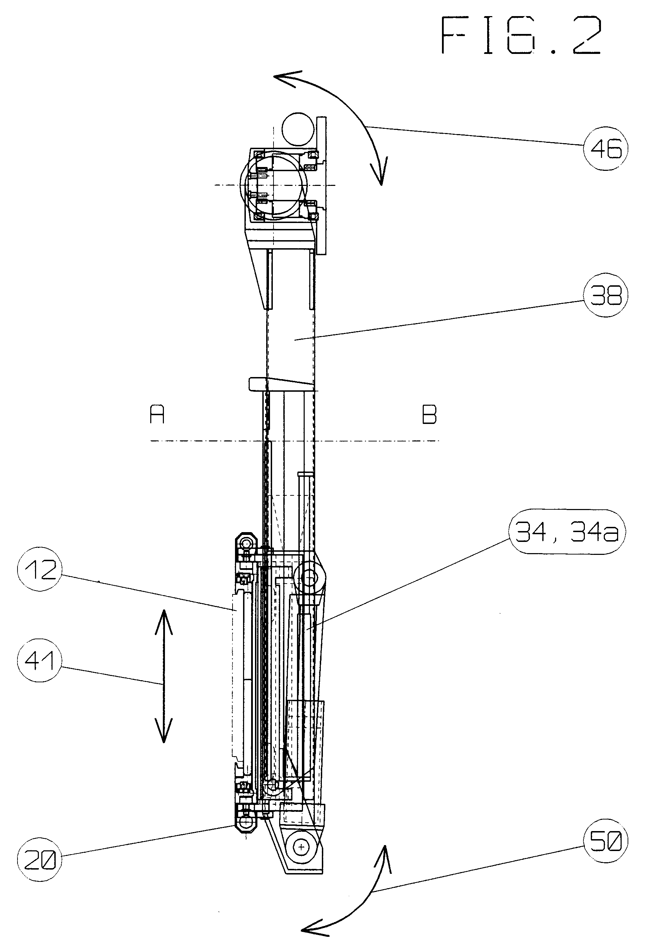

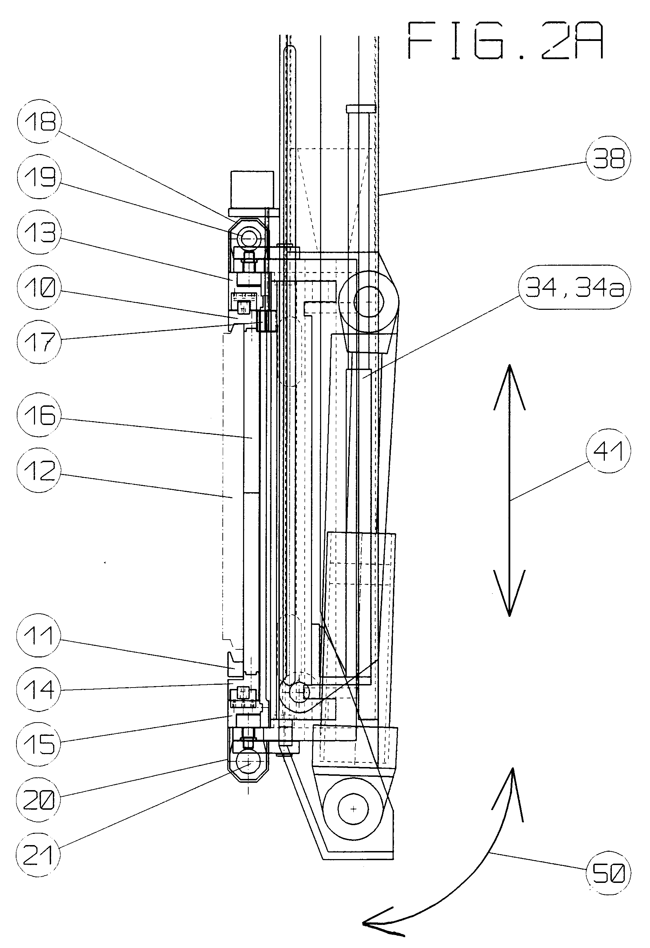

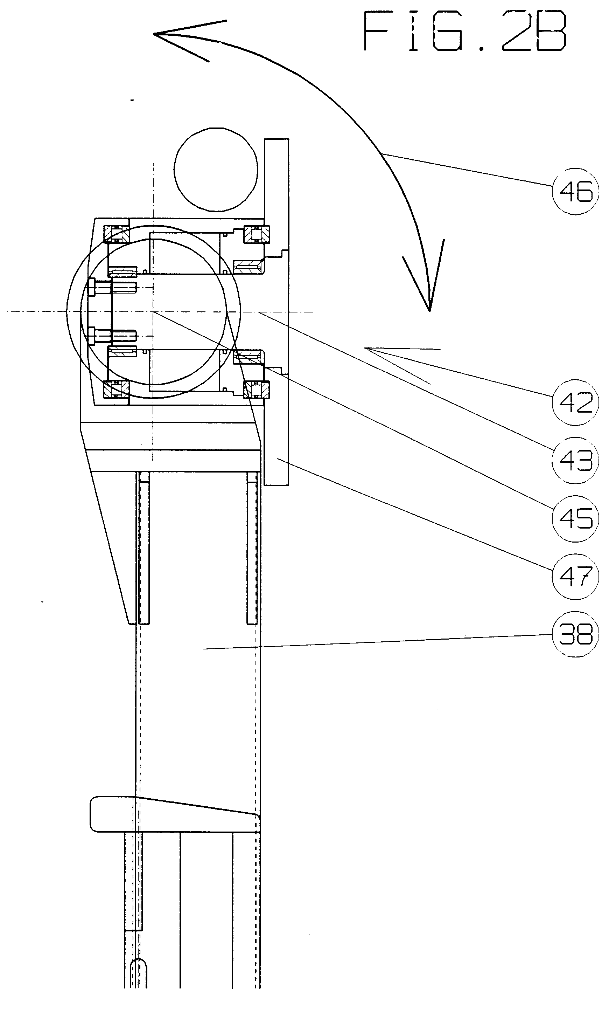

Wie sich insbesondere aus den Figuren 1, 2 und 2A ergibt, hat der Manipulator ein geräteseitiges Anschließteil, welches aus einem oberen Auflagerbalken 10 und einem unteren Klemmbalken 11 besteht und an einem Anschließteil 12 des in der Zeichnung im einzelnen nicht dargestellten fahrbaren Arbeitsgerätes angeschlossen ist. An dem oberen Balken 10 ist ein beweglicher Lagerbalken 13 parallel zum Auflagerbalken 10 vorgesehen. Desgleichen ist auch unterhalb eines Balkens 14 ein zu diesem parallel angeordneter Lagerbalken 15 vorgesehen, wobei die beiden Balken 10 und 14 zwischen sich eine Platte 16 und die Lagerbalken 13 und 15 zwischen sich eine Platte 16a einschließen.

Zum Verschieben des Manipulators quer zur Montagerichtung nach rechts und links wird das in Lagerbalken 13 gehaltene und in Auflagerbalken 10 kämmende Zahnrad 17 in die entsprechende Richtung gedreht.

An dem Balken 13 ist ein oberes Quergehäuse 18 mit in diesem (18) angeordneten je einer Rechts- und Linksgängigen Spindeln 19 und 19a dargestellt. Desgleichen ist ein unteres Quergehäuse 20 mit zwei darin angeordneten Spindeln 21 und 21a vorgesehen.

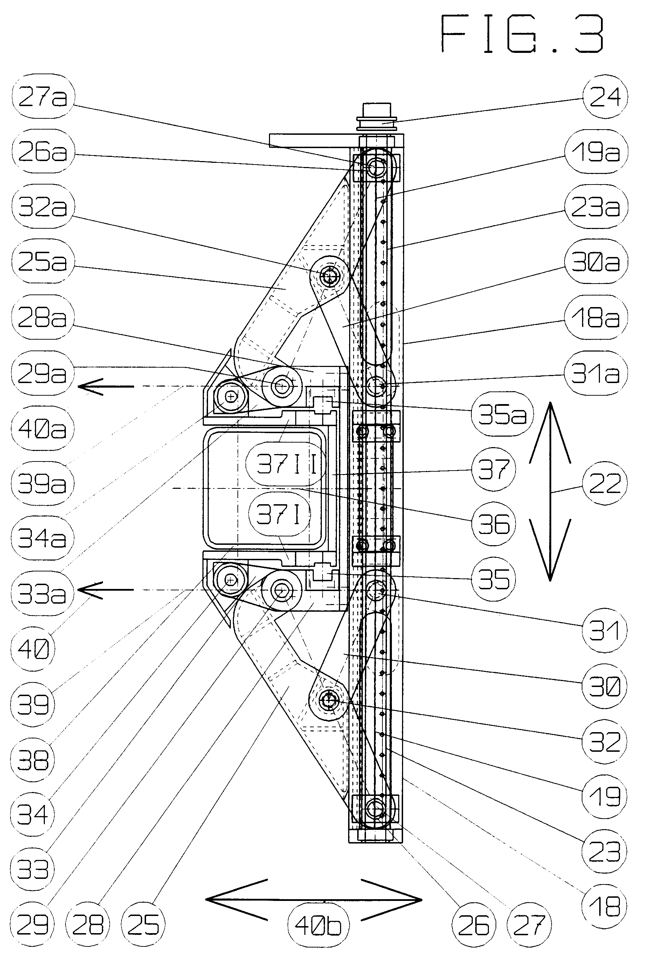

Wie insbesondere in Figur 3 dargestellt, ist in dem Quergehäuse 16 die Spindeln 19 und 19a über die gesamte Länge des Quergehäuses 18 gelagert. Bei den Spindeln 19, 19a, 21 und 21a handelt es sich um vier mit Außengewinde 23 versehene Stangen, die über zwei Kettenräder 24 mittels einer nicht dargestellten Kette anzutreiben sind.

Zwei Distanzierschwingen 25 und 25a sind an ihrem geräteseitig vorgesehenen je zwei übereinanderliegenden Lagerpunkten 27 und 27a über darin gehaltene vier Stützrollen 26 und 26a in vier Nuten innerhalb der Lagerbalken 13 und 15 geführt und an ihrem kippmastlseitigen Ende an einem Distanzierungsgehäuse 28 und 28a in je zwei übereinanderliegenden Drehlagern 29 und 29a gelagert.

Zwei mal zwei Laschen 30 und 30a sind in an den Lagerbalken 13 und 15 angeordneten Lagern 31 und 31a und in an der Distanzierschwinge 25 und 25a in deren mittleren Bereich angeordneten Lagern 32 und 32a gelagert.

An den Verbindungen 33 und 33a des Distanzierungsgehäuses 28 greiften zwei Hubzylinder 34 und 34a an, die mit dem Hubgehäuse 37, 37 I, 37 II verbunden sind.

Die Verbindung zwischen dem Distanzierungsmodul und dem Hebemodul erfolgt über zwei vertikale Führungen 35 und 35a, die zwischen dem Distanzierungsgehäuse 28 und dem Hubgehäuse 37, 37 I, 37 II angeordnet sind.

Vorstehend sind die Verhältnisse in Figur 3 links und rechts der Symmetrieebene 36 weitestgehend symmetrisch und gleich dargestellt.

Beim Drehen der Spindeln 19, 19a, 21 und 21a durch die Kettenräder 24 bewegen sich die vier Stützrollen 26 und 26a in gleichem Verhältnis aufeinander zu, wodurch sich die Lager 29 und 29a auf den Linien 39 und 39a gleichmäßig in Richtung der Pfeile 40 und 40a in Montagerichtung nach vorn bewegen, weil die parallele Bewegung in Richtung der Pfeile 40 und 40a durch die konstruktive Verbindung der vier Laschen 30 und 30a mit den zwei Distanzierschwingen 25 und 25a vorgegeben ist.

Bei umgekehrter Drehung der Spineln 19, 19a, 21 und 21a bewegt sich das Distanzierungsgehäuse 28 und 28a wieder zurück, also entgegengesetzt zu den Pfeilen 40 und 40a. Das bedeutet, daß das Distanzierungsgehäuse 28 und 28a mit allen daran angeschlossenen Bauteilen in Richtung des Doppelpfeiles 40b in Montagerichtung vorwärts und rückwärts bewegt werden kann.

Zwischen dem linken Teil 37 I und dem rechten Teil 37 II des Hubgehäuses 37 ist ein Kippmast 38 vorgesehen.

Zum Heben und Senken des Kippmastes 38 sind Schubkolbengetriebe 34 und 34a vorgesehen, die am Distanzierungsgehäuse 28 und 28a sowie am Hubgehäuse 37 befestigt sind, mit denen der Manipulator in Richtung des Doppelpfeiles 41 nach oben und unten entlang einer senkrecht auf der Flurebene orientierten senkrechten Achse zu verschieben ist.

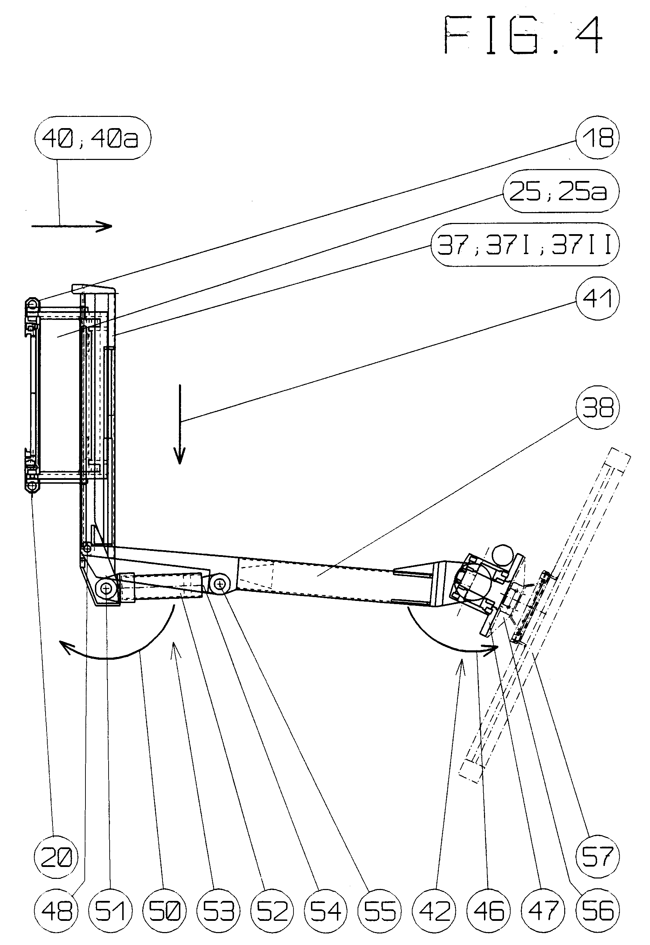

In Figur 4 ist der Manipulator in aktiver Stellung dargestellt. Die Distanzierschwingen 25, 25a sind nach vorn in Richtung der Pfeile 40, 40a verschoben und tragen vorn den Kippmast 38. Der Kippmast 38 hat an seinem unteren Ende ein Gelenk 48, um das der obere Teil des Kippmastes 38 in Richtung des Doppelpfeiles 50 nach vorn und zurück gekippt werden kann. Am Kippmast 38 ist ein Hubgehäuse 37, 37 I, 37 II mit einem Gelenk 51 angeordnet, an dem der Zylinder 52 eines Schubkolbentriebes 53 kippbeweglich gelagert ist, dessen Kolbenstange 54 in einem Gelenk 55 am Kippmast 38 kippbeweglich gelagert ist, wodurch die Kippbewegung in Richtung des Doppelpfeiles 50 des frei beweglichen Endes des Kippmastes 38 möglich ist.

Am oberen Ende des Kippmastes 38 ist ein Kipp-/ Roll-Modul 42 vorgesehen, mit dem zum einen die Anschlußplatte 47 um eine in Montagerichtung orientierte Längsachse im Uhrzeigersinn und entgegen dem Uhrzeigersinn, also in beiden Richtungen des Doppelpfeiles 44 zu rollen ist. Außerdem ist die Anschlußplatte 47 des Kipp-/ Roll-Modules 42 um eine quer zur Montagerichtung orientierte Querachse 45 oben nach vorn und nach hinten bzw. unten umgekehrt nach hinten und vorn in Richtung des Doppelpfeiles 46 zu kippen. Die Anschlußplatte 47 des Kipp-/ Roll-Modules 42 verfügt über ein oder mehrere auswechselbare Werkzeuge 56 mit dem die zu manipulierenden Bauteile 57 aufzunehmen, zu halten, zu bewegen und abzugeben sind.

Die Anschlußplatte 47 ist in beiden Richtungen des Doppelpfeiles 44 über einen in Figur 2B näher dargestellten hydraulischen Rollantrieb nach beiden Seiten hin zu drehen.

Aus der Darstellung gemäß Figur 4 ergibt sich, daß der Manipulator auf einer Querachse zu beiden Seiten hin seitlich (22), auf einer in Montagerichtung orientierten Längsachse nach vorn und hinten (40b) und entlang einer auf der Flurebene senkrecht angeordneten senkrechten Achse nach oben und unten (41) zu verschieben ist. Außerdem ist der Hubmast mittels des Gelenkes 48 und des Schubkolbentriebes 53 in Montagerichtung nach vorn und wieder zurück (50) zu kippen. Darüberhinaus ist es mit dem Kipp-/ Roll-Modul 42 möglich, das zu manipulierende Bauteil 57 um eine in Montagerichtung orientierte Längsachse zu Rollen und um eine quer zur Montagerichtung und horizontal gerichtete Querachse zu kippen.

Mit dem in Figur 4 dargestellten Manipulator 49 sind somit sämtliche Liniarbewegungen und sämtliche Kreisbewegungen mit Ausnahme des gierens um die senkrechte Achse möglich.

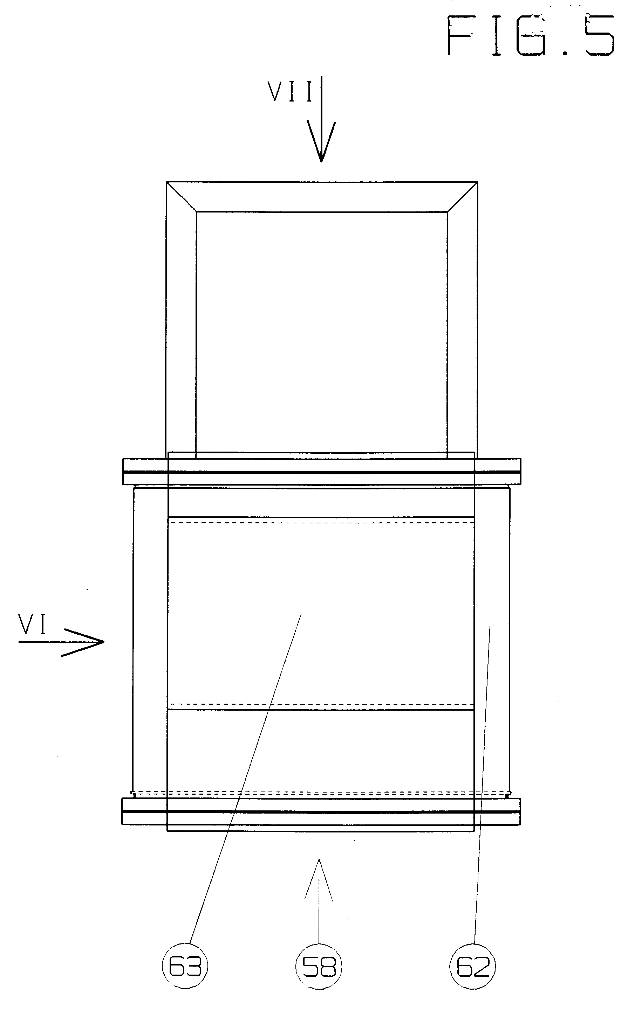

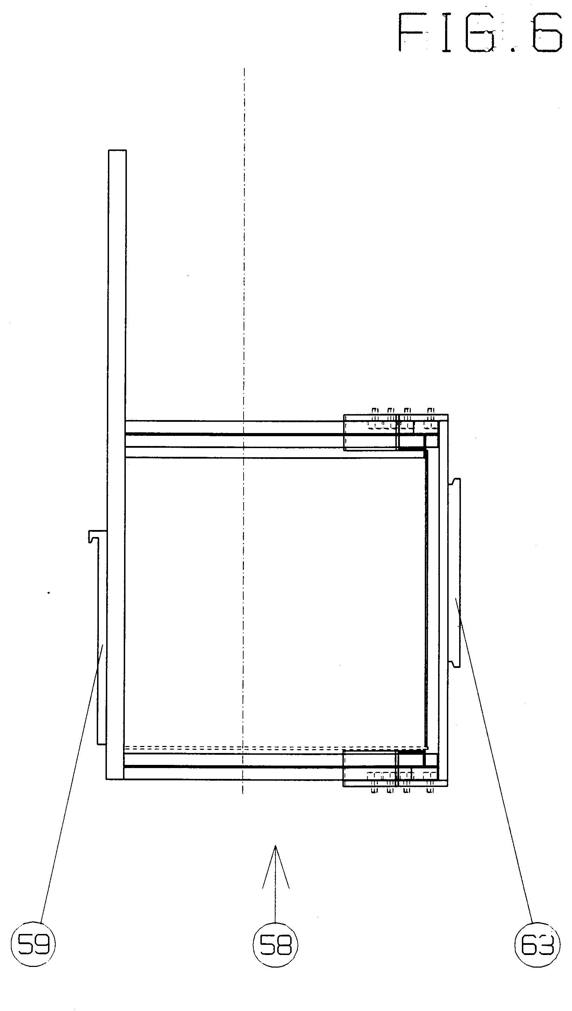

Wie sich insbesondere aus den Figuren 5,6 und 7 ergibt, ist ein Giermanipulator 58 vorgesehen, der in diesem Ausführungsbeispiel gleichzeitig auch als Arbeitsbühne dient. Der Giermanipulator 58 ist überwiegend kreiszylindrisch ausgebildet. Er hat an seinem geräteseitigen Ende eine Kupplung 59, mit der er am fahrbaren Arbeitsgerät angekuppelt werden kann. Auf dem zylindrischen Bereich des Giermanipulators ist eine Manipulatorkupplung 60 vorgesehen, die in ihrem inneren Bereich mehrere Lagergruppen 61 aufweist, welche der Krümmung des zylindrischen Teiles 62 des Giermanipulators 58 angepaßt sind und zur radialen Führung und Lagerung der Manipulatorkupplung 60 beim Verdrehen nach rechts und links dienen. Auf der gegenüberliegenden Seite hat der Giermanipulator 58 eine Kupplung 59 zum ankuppeln an ein entsprechendes Anschließteil 12 des fahrbaren Arbeitsgerätes, an dem der Manipulator 49 durch seinen gleichen Kupplungsaufbau auch ohne den Giermanipulator 58 gemäß den Figuren 1 bis 3 angekuppelt werden kann.

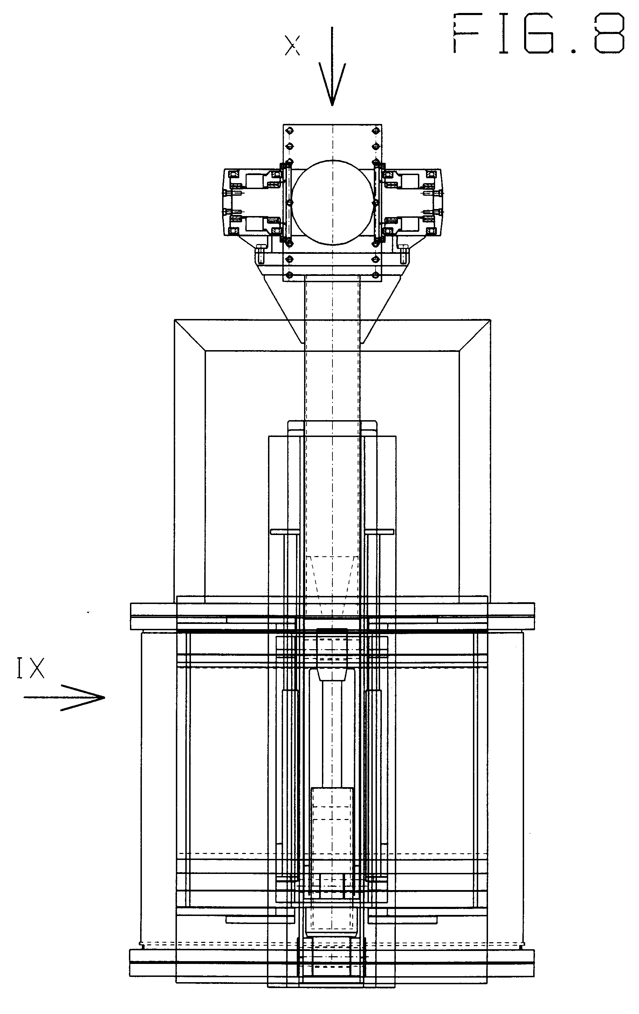

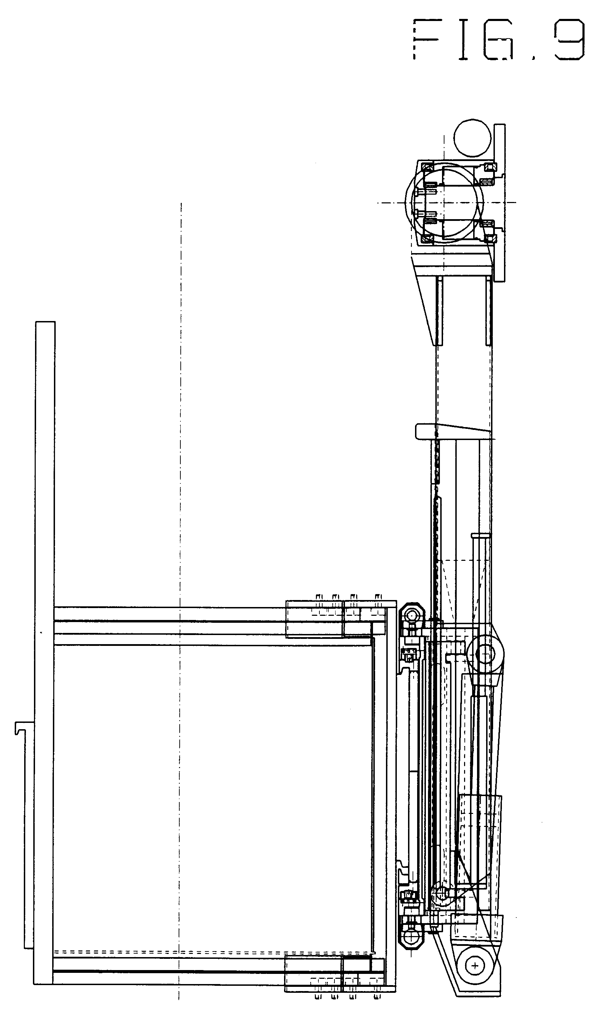

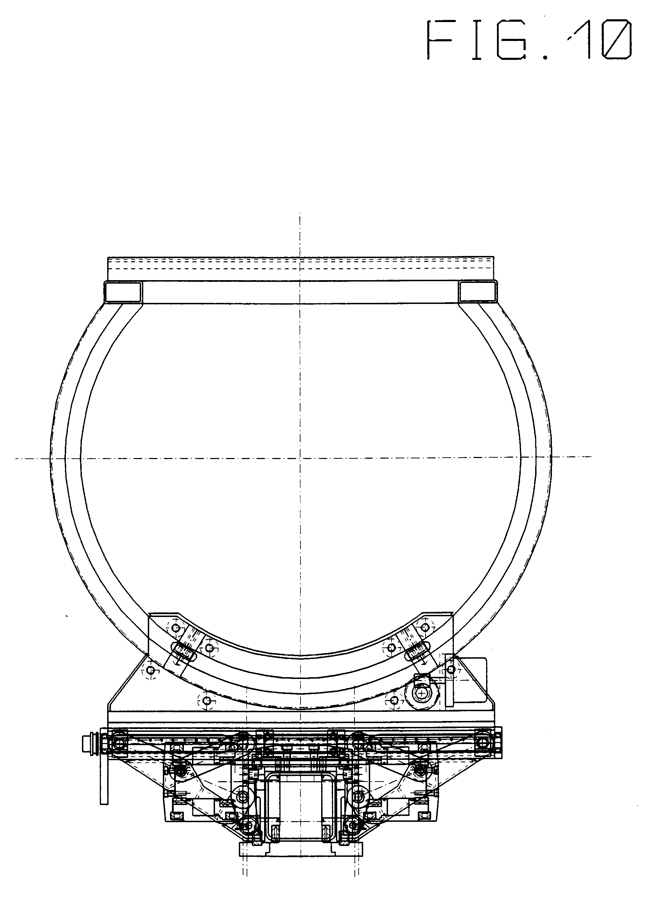

In den Figuren 8, 9 und 10 ist ein Manipulator 65 dargestellt, der aus den in den Figuren 1, 2, 2A, 2B und 3 beschriebenen Teilen und aus den in den Figuren 5, 6 und 7 dargestellten Teilen des Giermanipulators 58 zusammengesetzt ist.

Somit ist es mit dem in den Figuren 8, 9 und 10 dargestellten Manipulator 65 möglich, alle zu der Figur 4 dargestellten Linearbewegungen und Kreisbewegungen und zusätzlich zu diesen auch noch die Drehbewegung um die senkrecht auf der Flurebene stehende senkrechte Achse auszuführen. Mit diesem Manipulator 65 lassen sich somit alle möglichen dreidimensionalen Bewegungen durchführen, wobei der Manipulator 65 in beliebiger Position arretierbar ist.

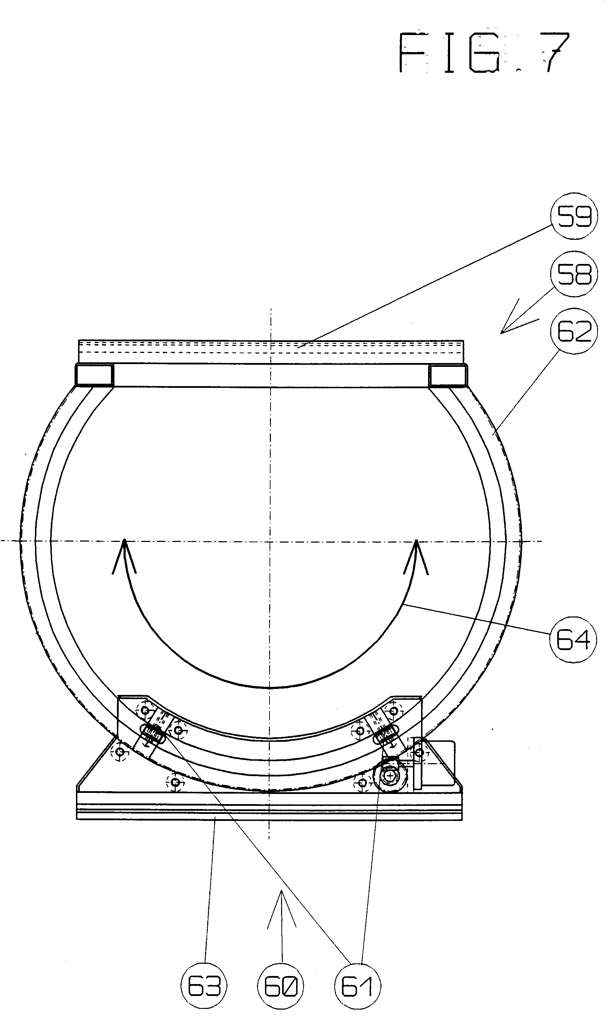

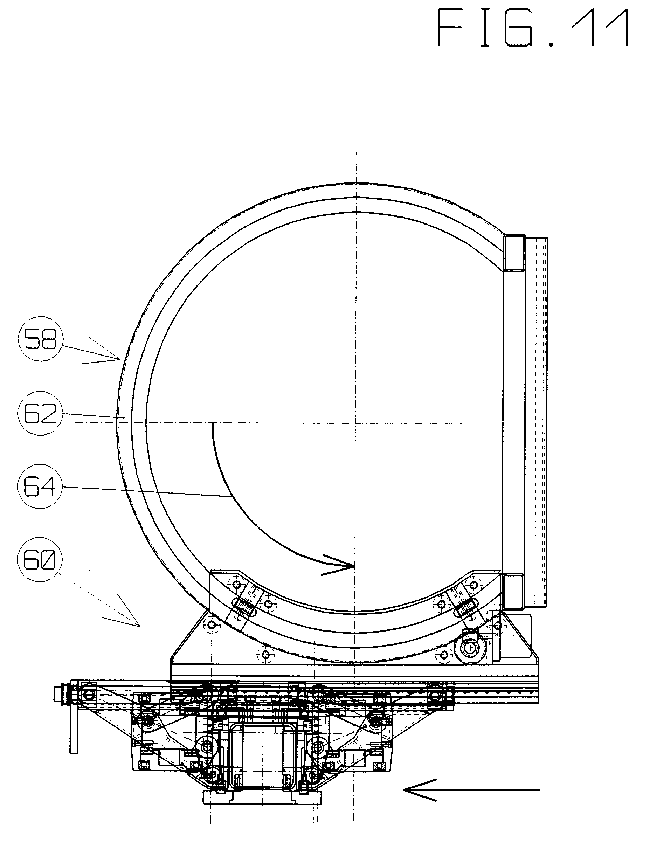

In Figur 11 ist der Manipulator 65 dargestellt, auf dem die Manipulatorkupplung 60 des Giermanipulator 58 gegenüber der Darstellung gemäß Figur 7 in Richtung des Pfeiles 64 entgegen dem Uhrzeigersinn um 90° gedreht ist. Der Giermanipulator 58 selbst ist mit dem Arbeitsgerät fest verbunden, also nicht drehbeweglich. Die Gierbewegung des Manipulators 49 erfolgt auf dem feststehenden zylindrischen Teil 62 des Giermanipulators 58.

## Patentansprüche

1. Mehrteiliger Manipulator (49) zum genauen Manipulieren eines Bauteils (57) in allen drei Richtungen (22,40b,41) des rechtwinkligen räumlichen Koordinatensystems, der vorn an einem fahrbaren Arbeitsgerät lösbar anzubringen ist, mit einem geräteseitigen Anschließteil (12) zum Anschließen des Manipulators (49) am Arbeitsgerät und mit einem bauteilseitigen Werkzeug (56) mit Halterungen zum Aufnehmen, Bewegen, Halten und Abgeben des Bauteils (57), wobei zum genauen linearen Verschieben des Bauteils in allen drei achsparallelen Richtungen (20,40b,41) eine Gruppe von drei Linearmodulen vorgesehen ist, von denen das eine als Schiebemodul, das andere als Distanzierungsmodul und das weitere als Hebemodul ausgebildet ist und das Schiebemodul Bewegungen in Richtung der Querachse nach rechts und nach links (22), das Distanzierungsmodul Bewegungen in Montagerichtung vorwärts und rückwärts (40b) und das Hebemodul Bewegungen auf der senkrechten Achse aufwärts und abwärts (41) ausführt, und wobei zum Kippen des Bauteils (57) ein um eine quer zur Montagerichtung orientierte Querachse (48) zu kippendes und in beliebiger Kipplage zu arretierendes Kippmodul, das aus einem Kippmast (38) und zwei parallelen zueinander angeordneten Achsen (45,48) besteht, angeordnet ist und wobei zum Rollen des Bauteils (57) in Montagerichtung ein um die Längsachse (43) im Uhrzeigersinn und entgegen dem Uhrzeigersinn zu rollendes und in beliebiger Rolllage zu arretierendes Rollmodul vorgesehen ist, **dadurch gekennzeichnet,** daß der Kippmast (38) an seinem unteren Ende um eine Kippachse (48) an einem Linearmodul kippbeweglich quer zur Montagerichtung gelagert ist und daß der Kippmast an seinem oberen Ende über eine obere Rollachse (43) mit dem Rollmodul (42) verbunden ist.

2. Mehrteiliger Manipulator (49) zum genauen Manipulieren eines Bauteils (57) in allen drei Richtungen (22,40b,41) des rechtwinkligen räumlichen Koordinatensystems, der vorn an einem fahrbaren Arbeitsgerät lösbar anzubringen ist, mit einem geräteseitigen Anschließteil (12) zum Anschließen des Manipulators (49) am Arbeitsgerät und mit einem bauteilseitigen Werkzeug (56) mit Halterungen zum Aufnehmen, Bewegen, Halten und Abgeben des Bauteils (57), wobei zum genauen linearen Verschieben des Bauteils in allen drei achsparallelen Richtungen (20,40b,41) eine Gruppe von drei Linearmodulen vorgesehen ist, von denen das eine als Schiebemodul, das andere als Distanzierungsmodul und das weitere als Hebemodul ausgebildet ist und das Schiebemodul Bewegungen in Richtung der Querachse nach rechts und nach links (22), das Distanzierungsmodul Bewegungen in Montagerichtung vorwärts und rückwärts (40b) und das Hebemodul Bewegungen auf der senkrechten Achse aufwärts und abwärts (41) ausführt, und wobei zum Kippen des Bauteils (57) ein um eine quer zur Montagerichtung orientierte Querachse (48) zu kippendes und in beliebiger Kipplage zu arretierendes Kippmodul, das aus einem Kippmast (38) und zwei parallelen zueinander angeordneten Achsen (43,48) besteht, angeordnet ist und wobei zum Rollen des Bauteils (57) in Montagerichtung ein um die Längsachse im Uhrzeigersinn und entgegen dem Uhrzeigersinn (45) zu rollendes und in beliebiger Rolllage zu arretierendes Rollmodul vorgesehen ist, **dadurch gekennzeichnet,** daß die obere Kippachse (45) durch einen Gierantrieb, der zwischen der Kipp- und der Rollachse (43,48) angeordnet ist, um die Mittellängsachse des Kippmastes in beiden Richtungen zu verdrehen sowie in beliebiger Stellung zu halten ist und daß der Kippmast an seinem unteren Ende um eine Kippachse (48) an einem Linearmodul kippbeweglich quer zur Montagerichtung gelagert sowie am oberen Ende über eine obere Rollachse mit dem Rollmodul (42) verbunden ist.

3. Mehrteiliger Manipulator (49) zum genauen Manipulieren eines Bauteils (57) in allen drei Richtungen (22,40b,41) des rechtwinkligen räumlichen Koordinatensystems, der vorn an einem fahrbaren Arbeitsgerät lösbar anzubringen ist, mit einem geräteseitigen Anschließteil (12) zum Anschließen des Manipulators (49) am Arbeitsgerät und mit einem bauteilseitigen Werkzeug (56) mit Halterungen zum Aufnehmen, Bewegen, Halten und Abgeben des Bauteils (57), wobei zum genauen linearen Verschieben des Bauteils in allen drei achsparallelen Richtungen (20,40b,41) eine Gruppe von drei Linearmodulen vorgesehen ist, von denen das eine als Schiebemodul, das andere als Distanzierungsmodul und das weitere als Hebemodul ausgebildet ist und das Schiebemodul Bewegungen in Richtung der Querachse nach rechts und nach links (22), das Distanzierungsmodul Bewegungen in Montagerichtung vorwärts und rückwärts (40b) und das Hebemodul Bewegungen auf der senkrechten Achse aufwärts und abwärts (41) ausführt, und wobei zum Kippen des Bauteils (57) ein um eine quer zur Montagerichtung orientierte Querachse (48) zu kippendes und in beliebiger Kipplage zu arretierendes Kippmodul, das aus einem Kippmast (38) und zwei parallelen zueinander angeordneten Achsen (43,48) besteht, angeordnet ist und wobei zum Rollen des Bauteils (57) in Montagerichtung ein um die Längsachse im Uhrzeigersinn und entgegen dem Uhrzeigersinn (45) zu rollendes und in beliebiger Rolllage zu arretierendes Rollmodul vorgesehen ist, **dadurch gekennzeichnet,** daß die obere Kippachse (45) durch einen Gierantrieb, der zwischen der linearmodulseitigen Kippachse und der Kippachse einer Kipp-Rollmodulgruppe angeordnet ist, um die Mittellängsachse des Kippmastes in beiden Richtungen zu verdrehen sowie in beliebiger Stellung zu halten ist und daß der Kippmast an seinem unteren Ende um eine Kippachse (48) an einem Linearmodul kippbeweglich quer zur Montagerichtung gelagert sowie am oberen Ende über eine obere Rollachse mit dem Rollmodul (42) verbunden ist.

4. Manipulator nach einem der Ansprüche 1 bis 3, dadurch gekennzeichnet, daß zwischen dem Arbeitsgerät und dem Manipulator ein Giermodul (58) vorgesehen ist, das mittels eines Gierantriebes um eine oder zwei senkrecht auf der Flurebene stehende Gierachsen in beiden Drehrichtungen zu gieren ist.

5. Manipulator nach einem der Ansprüche 1 bis 4, dadurch gekennzeichnet, daß das Drehmodul zusätzlich als Arbeitsbühne ausgebildet ist.

6. Manipulator nach einem vorhergehenden Ansprüche, dadurch gekennzeichnet, daß die Reihenfolge der einzelnen Module innerhalb der Linearmodulgruppe vom Anschließteil aus
Schiebemodul, Distanzierungsmodul, Hebemodul
oder
Schiebemodul, Hebemodul, Distanzierungsmodul
oder
Hebemodul, Distanzierungsmodul, Schiebemodul
oder
Hebemodul, Schiebemodul, Distanzierungsmodul
oder
Distanzierungsmodul, Hebemodul, Schiebemodul
oder
Distanzierungsmodul, Schiebemodul, Hebemodul
ist.

7. Manipulator nach einem der vorhergehenden Ansprüche, dadurch gekennzeichnet, daß drei Linearmodule, die mit je einer anderen der drei räumlichen Linearbewegungen des Koordinatensystems ausgestattet sind, eine Gruppe bilden, ohne daß zwischen den Linearmodulen ein oder mehrere Drehmodule angeordnet sind.

8. Manipulator nach einem der vorhergehenden Ansprüche, dadurch gekennzeichnet, daß die Drehmodule, die mit je einer anderen der drei räumlichen Rotationsbewegungen des Koordinatensystems ausgestattet sind, eine Gruppe bilden, ohne daß zwischen den Drehmodulen ein oder mehrere Linearmodule angeordnet sind.

9. Manipulator nach einem der vorhergehenden Ansprüche, dadurch gekennzeichnet, daß die Drehmodule so angeordnet sind, daß ein freies Drehen des Bauteiles (57) um alle drei Achsen des räumlichen Koordinatensystems möglich ist.

## Claims

1. A multi-part manipulator (49) for precise manipulation of a component (57) in all three directions (22, 40b, 41) of the right-angled spatial co-ordinate system, which is to be releasably mounted at the front on a movable working apparatus, comprising a connecting portion (12) at the apparatus side for connection of the manipulator (49) to the working apparatus and a tool (56) at the component side with holding means for receiving, moving, holding and delivering the component (57), wherein for precise linear displacement of the component in all three axis-parallel directions (20, 40b, 41), there is provided a group of three linear modules of which one is in the form of a shift module, the other is in the form of a distancing module and the further module is in the form of a lift module and the shift module performs movements in the direction of the transverse axis towards the right and the left (22), the distancing module performs movements in the mounting direction forwardly and rearwardly (40b) and the lift module performs movements upwardly and downwardly on the vertical axis (41), and wherein for tilting the component (57) there is a tilt module which is to be tilted about a transverse axis (48) oriented transversely to the mounting direction and which is to be arrested in any tilt position and which comprises a tilt mast (38) and two axes (45, 48) arranged parallel to each other, and wherein for rolling the component (57) in the mounting direction there is provided a rolling module which is to be rolled about the longitudinal axis (43) in the clockwise direction and in the anti-clockwise direction and which is to be arrested in any roll position, characterised in that the tilt mast (38) is mounted at its lower end on a linear module tiltably transversely to the mounting direction about a tilt axis (48) and at its upper end the tilt mast is connected by way of an upper rolling axis (43) to the rolling module (42).

2. A multi-part manipulator (49) for precise manipulation of a component (57) in all three directions (22, 40b, 41) of the right-angled spatial co-ordinate system, which is to be releasably mounted at the front on a movable working apparatus, comprising a connecting portion (12) at the apparatus side for connection of the manipulator (49) to the working apparatus and a tool (56) at the component side with holding means for receiving, moving, holding and delivering the component (57), wherein for precise linear displacement of the component in all three axis-parallel directions (20, 40b, 41), there is provided a group of three linear modules of which one is in the form of a shift module, the other is in the form of a distancing module and the further module is in the form of a lift module and the shift module performs movements in the direction of the transverse axis towards the right and the left (22), the distancing module performs movements in the mounting direction forwardly and rearwardly (40b) and the lift module performs movements upwardly and downwardly on the vertical axis (41), and wherein for tilting the component (57) there is a tilt module which is to be tilted about a transverse axis (48) oriented transversely to the mounting direction and which is to be arrested in any tilt position and which comprises a tilt mast (38) and two axes (45, 48) arranged parallel to each other, and wherein for rolling the component (57) in the mounting direction there is provided a rolling module which is to be rolled about the longitudinal axis in the clockwise direction and in the anti-clockwise direction (45) and which is to be arrested in any roll position, characterised in that by means of a yaw drive which is arranged between the tilt and the rolling axes (43, 48) the upper tilt axis (45) is to be rotated about the central longitudinal axis of the tilt mast in both directions and is to be held in any position, and that at its lower end the tilt mast is mounted on a linear module tiltably transversely to the mounting direction about a tilt axis (48) and at the upper end is connected to the rolling module (42) by way of an upper roll axis.

3. A multi-part manipulator (49) for precise manipulation of a component (57) in all three directions (22, 40b, 41) of the right-angled spatial co-ordinate system, which is to be releasably mounted at the front on a movable working apparatus, comprising a connecting portion (12) at the apparatus side for connection of the manipulator (49) to the working apparatus and a tool (56) at the component side with holding means for receiving, moving, holding and delivering the component (57), wherein for precise linear displacement of the component in all three axis-parallel directions (20, 40b, 41), there is provided a group of three linear modules of which one is in the form of a shift module, the other is in the form of a distancing module and the further module is in the form of a lift module and the shift module performs movements in the direction of the transverse axis towards the right and the left (22), the distancing module performs movements in the mounting direction forwardly and rearwardly (40b) and the lift module performs movements upwardly and downwardly on the vertical axis (41), and wherein for tilting the component (57) there is a tilt module which is to be tilted about a transverse axis (48) oriented transversely to the mounting direction and which is to be arrested in any tilt position and which comprises a tilt mast (38) and two axes (45, 48) arranged parallel to each other, and wherein for rolling the component (57) in the mounting direction there is provided a rolling module which is to be rolled about the longitudinal axis in the clockwise direction and in the anti-clockwise direction (45) and which is to be arrested in any roll position, characterised in that by a yaw drive which is arranged between the tilt axis at the linear module side and the tilt axis of a tilt-rolling module group the upper tilt axis (45) is to be rotated about the central longitudinal axis of the tilt mast in both directions and is to be held in any position and that at its lower end the tilt mast is mounted on a linear module tiltably transversely to the mounting direction about a tilt axis (48) and at the upper end is connected to the rolling module (42) by way of an upper roll axis.

4. A manipulator according to one of claims 1 to 3 characterised in that provided between the working apparatus and the manipulator is a yaw module (58) which is to be yawed by means of a yaw drive in both directions of rotation about one or two yaw axes which are perpendicular to the plane of the floor.

5. A manipulator according to one of claims 1 to 4 characterised in that the turning module is additionally in the form of a working platform.

6. A manipulator according to one of the preceding claims characterised in that the sequence of the individual modules within the linear module group from the connecting portion is:
shift module, distancing module, lift module
or
shift module, lift module, distancing module
or
lift module, distancing module, shift module
or
lift module, shift module, distancing module
or
distancing module, lift module, shift module
or
distancing module, shift module, lift module.

7. A manipulator according to one of the preceding claims characterised in that three linear modules which are provided with a respective other of the three spatial linear movements of the co-ordinate system form a group without one or more turning modules being arranged between the linear modules.

8. A manipulator according to one of the preceding claims characterised in that the turning modules which are provided with a respective other of the three spatial rotational movements of the co-ordinate system form a group without one or more linear modules being arranged between the turning modules.

9. A manipulator according to one of the preceding claims characterised in that the turning modules are so arranged that a free turning movement of the component (57) about all three axes of the spatial co-ordinate system is possible.

## Revendications

1. Manipulateur (49) en plusieurs parties pour la manipulation précise d'une pièce (57) dans les trois directions (22, 40b, 41) du système de coordonnées rectangulaires dans l'espace, qui doit être monté de manière amovible à l'avant d'un appareil de travail mobile, comprenant un élément de raccordement (12) du côté appareil pour le rattachement du manipulateur (49) à l'appareil de travail et, du côté de la pièce, un outil (56) avec des fixations pour la réception, le déplacement, la retenue et le transfert de la pièce (57),dans lequel pour le déplacement linéaire précis de la pièce dans les trois directions (20, 40b, 41) parallèles à l'axe il est prévu un groupe de trois modules linéaires conformés l'un en module de poussée, l'autre en module d'écartement et le troisième en module de levage, le module de poussée décrivant des mouvements dans la direction de l'axe transversal vers la droite et vers la gauche (22), le module d'écartement effectuant des mouvements dans la direction de montage vers l'avant et vers l'arrière (40b), et le module de levage effectuant des mouvements ascendants et descendants (41) sur l'axe vertical, le basculement de la pièce (57) étant assuré par un module de basculement constitué d'un mât de basculement (38) et de deux axes parallèles (45, 48), qui peut être basculé autour d'un axe transversal (48) orienté transversalement à la direction de montage et arrêté dans n'importe quelle position de basculement, et un module de roulement pouvant rouler autour de l'axe longitudinal (43) dans le sens horaire et dans le sens antihoraire et être bloqué dans n'importe quelle position de roulement étant prévu pour le roulement de la pièce (57) dans la direction de montage, **caractérisé en ce** que le mât de basculement (38) est monté à son extrémité inférieure de façon à pouvoir basculer, transversalement à la direction de montage, autour d'un axe de basculement (48), sur un module linéaire, et que l'extrémité supérieure du mât de basculement est rattachée au module de roulement (42) par l'intermédiaire d'un axe de roulement supérieur (43).

2. Manipulateur (49) en plusieurs parties pour la manipulation précise d'une pièce (57) dans les trois directions (22, 40b, 41) du système de coordonnées rectangulaires dans l'espace, qui doit être monté de manière amovible à l'avant d'un appareil de travail mobile, comprenant un élément de raccordement (12) du côté appareil pour le rattachement du manipulateur (49) à l'appareil de travail et, du côté de la pièce, un outil (56) avec des fixations pour la réception, le déplacement, la retenue et le transfert de la pièce (57), dans lequel pour le déplacement linéaire précis de la pièce dans les trois directions (20, 40b, 41) parallèles à l'axe il est prévu un groupe de trois modules linéaires conformés l'un en module de poussée, l'autre en module d'écartement et le troisième en module de levage, le module de poussée décrivant des mouvements dans la direction de l'axe transversal vers la droite et vers la gauche (22), le module d'écartement effectuant des mouvements dans la direction de montage vers l'avant et vers l'arrière (40b), et le module de levage effectuant des mouvements ascendants et descendants (41) sur l'axe vertical, le basculement de la pièce (57) étant assuré par un module de basculement constitué d'un mât de basculement (38) et de deux axes parallèles (43, 48), qui peut être basculé autour d'un axe transversal (48) orienté transversalement à la direction de montage et arrêté dans n'importe quelle position de basculement, et un module de roulement pouvant rouler autour de l'axe longitudinal dans le sens horaire et dans le sens antihoraire (45) et être bloqué dans n'importe quelle position de roulement étant prévu pour le roulement de la pièce (57), caractérisé en ce que l'axe de basculement supérieur (45) peut être tourné dans les deux sens autour de l'axe longitudinal médian du mât de basculement au moyen d'un entraînement en lacets monté entre l'axe de basculement et l'axe de roulement (43, 48), et maintenu dans une position quelconque, et que l'extrémité inférieure du mât de basculement est montée sur un module linéaire de façon à pouvoir basculer autour d'un axe de basculement (48) transversalement à la direction de montage, et que son extrémité supérieure est rattachée au module de roulement (42) par l'intermédiaire d'un axe de roulement supérieur.

3. Manipulateur (49) en plusieurs parties pour la manipulation précise d'une pièce (57) dans les trois directions (22, 40b, 41) du système de coordonnées rectangulaires dans l'espace, qui doit être monté de manière amovible à l'avant d'un appareil de travail mobile, comprenant un élément de raccordement (12) du côté appareil pour le rattachement du manipulateur (49) à l'appareil de travail et, du côté de la pièce, un outil (56) avec des fixations pour la réception, le déplacement, la retenue et le transfert de la pièce (57), dans lequel pour le déplacement linéaire précis de la pièce dans les trois directions (20, 40b, 41) parallèles à l'axe il est prévu un groupe de trois modules linéaires conformés l'un en module de poussée, l'autre en module d'écartement et le troisième en module de levage, le module de poussée décrivant des mouvements dans la direction de l'axe transversal vers la droite et vers la gauche (22), le module d'écartement effectuant des mouvements dans la direction de montage vers l'avant et vers l'arrière (40b), et le module de levage effectuant des mouvements ascendants et descendants (41) sur l'axe vertical, le basculement de la pièce (57) étant assuré par un module de basculement constitué d'un mât de basculement (38) et de deux axes parallèles (43, 48), qui peut être basculé autour d'un axe transversal (48) orienté transversalement à la direction de montage et arrêté dans n'importe quelle position de basculement, et un module de roulement pouvant rouler autour de l'axe longitudinal dans le sens horaire et dans le sens antihoraire (45) et être bloqué dans n'importe quelle position de roulement étant prévu pour le roulement de la pièce (57) dans la direction de montage, caractérisé en ce que l'axe de basculement supérieur (45) peut être tourné dans les deux sens autour de l'axe longitudinal médian du mât de basculement au moyen d'un entraînement en lacets monté entre l'axe de basculement situé du côté du module linéaire et l'axe de basculement d'un groupe de modules de basculement-roulement, et maintenu dans une position quelconque, et que l'extrémité inférieure du mât de basculement est montée sur un module linéaire de façon à pouvoir basculer autour d'un axe de basculement (48) transversalement à la direction de montage, et que son extrémité supérieure est rattachée au module de roulement (42) par l'intermédiaire d'un axe de roulement supérieur.

4. Manipulateur selon l'une des revendications 1 à 3, caractérisé en ce qu'entre l'appareil de travail et le manipulateur est prévu un module de lacet (58) qui, au moyen d'un entraînement en lacets, peut effectuer des mouvements en lacets dans les deux sens autour d'un ou de deux axes de lacet placés verticalement sur le plan du sol.

5. Manipulateur selon l'une des revendications 1 à 4, caractérisé en ce que le module de rotation est, en plus, conformé en plate-forme de travail.

6. Manipulateur selon l'une des revendications précédentes, caractérisé en ce que la succession des différents modules à l'intérieur du groupe de modules linéaires à partir de l'élément de raccordement est la suivante :
module de poussée, module d'écartement, module de levage ou
module de poussée, module de levage, module d'écartement ou
module de levage, module d'écartement, module de poussée ou
module de levage, module de poussée, module d'écartement ou
module d'écartement, module de levage, module de poussée ou
module d'écartement, module de poussée, module de levage.

7. Manipulateur selon l'une des revendications précédentes, caractérisé en ce que trois modules linéaires équipés chacun d'un autre des trois mouvements linéaires dans l'espace du système de coordonnées, forment un groupe sans qu'entre les modules linéaires soient disposés un ou plusieurs modules de rotation.

8. Manipulateur selon l'une des revendications précédentes, caractérisé en ce que les modules de rotation équipés chacun d'un autre mouvement de rotation dans l'espace du système de coordonnées, forment un groupe sans qu'entre les modules de rotation soient disposés un ou plusieurs modules linéaires.

9. Manipulateur selon l'une des revendications précédentes, caractérisé en ce que les modules de rotation sont disposés de telle façon que la pièce (57) peut tourner librement autour des trois axes du système de coordonnées dans l'espace.
